# EUROPÄISCHE PATENTANMELDUNG

(11) **EP 0 831 004 A2**
(43) Veröffentlichungstag der Anmeldung: **25.03.1998**
(21) Anmeldenummer: 97890183.3
(22) Anmeldetag: 15.09.1997
(51) Int. Cl.: B61F 5/22

(54) **Schienengeleitetes Fahrzeug**

(30) Priorität: 18.09.1996 AT 1647/96
(71) Anmelder: Österreichische Bundesbahnen, 1010 Wien (AT)
(72) Erfinder: Pernold, Alexander, 1220 Wien (AT)
(74) Vertreter: Widtmann, Georg, Dipl.-Ing. Dr. techn.

(57) **Zusammenfassung**

Schienengeleitetes Fahrzeug, z. B. Triebfahrzeug, Waggon, mit einem Fahrgestell, insbesondere Drehgestell (1) und zumindest einem weiteren Bauteil, z. B. Wagenkasten (11), Stromabnehmer (16), welcher, bezogen auf das Fahrgestell, über einen Antrieb (13) quer zur Fortbewegungsrichtung des Fahrzeuges bewegbar, insbesondere schwenkbar, ist, wobei der Antrieb (13) über einen Scnsor (14, 15), welcher über Querbeschleunigungskräfte beeinflußbar ist, betätigbar ist, wobei der Sensor (14, 15) mit einem Kondensator (K₁, K₂) aufgebaut ist, welcher zumindest eine relativ zu einer bewegbaren Komponente (26) feststehende Kondensatorplatte (25) und zumindest die von den Querbeschleunigungskräften bewegbare Komponente (26) aufweist, und insbesondere über einen Analog-Digitalwandler (AD₁, AD₂, AD₃), vorzugsweise mit einem Rechner (R), gegebenenfalls mit Zeitnormal, verbunden ist, über welchen der Antrieb (13) angesteuert, insbesondere geregelt, ist.

## Beschreibung

Die Erfindung hat ein schienengeleitetes Fahrzeug, z. B. Triebfahrzeug, Waggon, zum Gegenstand, bei welchem ein Bauteil quer zur Fortbewegungsrichtung des Fahrzeuges bewegbar ist.

Schienengeleitete Fahrzeuge, seien es Schienenfahrzeuge oder beispielsweise Magnetschwebebahnen u. dgl., werden für immer höhere Geschwindigkeiten, wie beispielsweise wesentlich über 200 km pro Stunde, ausgelegt. Neben einem entsprechenden Ausbau der Strecke, wie beispielsweise Überhöhungen in Kurven, sind auch konstruktive Maßnahmen für die Fahrzeuge, insbesondere das rollende Material, erforderlich. So muß eine ärodynamische günstige Ausbildung der Fahrzeuge durchgeführt, für eine entsprechende Lagerung Sorge getragen werden u. dgl. Bei dem Neubau von Strecken wird versucht, den Wunsch, eine möglichst geradlinige Führung derselben zu erreichen, soweit wie möglich zu berücksichtigen. Bei bestehenden Strecken und insbesondere bei gebirgigem Gelände sind der möglichst geradlinigen Führung von Strecken Grenzen gesetzt, so daß, um höhere Geschwindigkeiten der Züge in Kurven zu erreichen, eine Überhöhung alleine nicht ausreichend ist. Zu diesem Zwecke sind sogenannte Wagenkastenneigungssysteme entwickelt worden, die entweder zentral für einen Zug oder für jeden Waggon bzw. Triebeinheit des Zuges eine Neigeinrichtung aufweisen. Hiebei wird der Wagenkasten in das Innere der Kurve geneigt, wodurch bei gleichbleibendem Fahrkomfort der Passagiere eine höhere Geschwindigkeit in der Kurve gefahren werden kann. Ein Triebfahrzeug kann ebenfalls ein Wagenkastenneigungssystem aufweisen. Auch besteht bei erhöhter Geschwindigkeit die Möglichkeit, einer durch die Zentrifugalkraft bedingten Neigung des Wagenkastens des Trieb fahrzeuges entgegenzuwirken. Am Wagenkasten des Triebfahrzeuges ist bei einer Strecke mit Oberleitung der Stromabnehmer angeordnet, wobei durch die Neigebewegungen, die geschwindigkeitsabhängig sind, die Gefahr besteht, daß der Stromabnchmer nicht mehr in Kontakt mit der Oberleitung steht. Damit sind Höchstgeschwindigkeiten vorgegeben. Es sind unterschiedlichste Konstruktionen bekannt, um ein Verschieben bzw. Verschwenken des Wagenkastens durchzuführen. Eine Möglichkeit besteht darin, den Wagenkasten aufzuhängen und um diese Achse zu schwenken oder auch den Wagenkasten am Fahrgestell anzulenken und je nach dem welche Neigung des Wagens erreicht werden soll, links oder rechts von der Fahrtrichtung den Wagenkasten anzuheben. Ein derartiges Anheben oder Schwenken kann entweder rein mechanisch, also beispielsweise über Elektromotoren, Ritzel und Zahnstangen, aber auch - und diese Ausführungsform ist bevorzugt - mit einem Druckmedium, insbesondere mit einer Hydraulikflüssigkeit und einem entsprechenden Zylinder mit Kolben, erfolgen. Die Federungen von rollendem Material mit Wagenkastenneigungssteuerung sind weicher als die des herkömmlichen rollenden Materials, um die Kräfte für die Neigung geringer halten zu können. Die Steuerung des Antriebes muß in Abhängigkeit von den auftretenden bzw. zu erwartenden Zentrifugalkräften, also Querbeschleunigungskräften, erfolgen, um keine Unter- bzw. Überkompensation durch die Ncigung zu verursachen. Hiefür ist es erforderlich, daß die Querbeschleunigungskräfte einerseits möglichst genau aufgenommen und andererseits auch einer exakten Bearbeitung zugeführt werden. Zur Messung der Querbeschleunigungskräfte sind verschiedene Systeme bekannt. Das einfachste System weist einen piezoelektrischen Schaltkreis auf, wobei die vom Piezokristall abgegebene Spannung proportional zu den auftretenden Kräften ist. Ein derartiges Meßsystem ermöglicht eine einfache Umwandlung von Kräften in elektrische Größen ist jedoch ein hochempfindliches System, so daß durch Eigenschwingungcn des Wagenkastens, wie sie beispielsweise durch Rollen desselben auftreten können, Störungen bedingt werden, die eine exakte und auch rechtzeitige Steuerung der Querbewegung wesentlich erschwert.

Ein weiteres System besteht darin, daß im Fahrgestell ein kardanisch aufgehängter Kreisel vorgesehen ist. Wie bekannt, sind die Kreisel bestrebt, ihre Rotationsebene beizubehalten. Wirken Kräfte auf einen Kreisel ein, so tritt eine Bewegung, und zwar ein Ausweichen des Kreisels um 90° zur Einwirkrichtung der Kräfte, ein. Auch hier treten zusätzliche Kräfte auf, die beispielsweise mit piezokristallen bestimmt werden können. Auch diesem System ist es eigen, daß eine sehr hohe Empfindlichkeit vorliegt, die einer wirksamen Steuerung, insbesondere einer Regelung der Querbewegung bzw. der Schwenkbewegung von Bauteilen, entgegensteht.

Es sind auch Laserkreisel bekannt, die bei Schiffen, U-Booten, Flugzeugen und Raketen den herkömmlichen Kreisel ersetzen. Das Funktionsprinzip eines Lascrkreisels besteht im wesentlichen darin, daß zwei Laserstrahlen in einem Dreieck, welches über Umlenkspiegel gebildet ist, im Gegensinn zueinanderlaufen. Wird die Anordnung, beispielsweise nach links gedreht, so benötigt der linksumlaufende Laserstrahl geringfügig länger für einen gesamten Umlauf als der rechtsumlaufende Laserstrahl. Dieser Unterschied kann anhand der Wellenfront bestimmt werden. Es liegt hier ein besonders empfindliches Meßsystem vor. Anstelle der Umlenkspiegeln können auch Glasfaserspulen zum Einsatz gelangen, wobei unter Einsatz von bestimmten Laserdioden von einem sogenannten Faserkreisel gesprochen wird. Derartige Systeme sind geeignet, einerseits Geschwindigkeiten und andererseits Ortsveränderungen zu messen. Querbeschleunigungskräfte werden mit einem derartigen System nicht gemessen. Es kann lediglich eine Richtungsänderung bzw. Änderung der Geschwindigkeit gemessen werden.

Bei der Steuerung bzw. Regelung der Querbewegung von einem Stromabnehmer oder Palette desselben wird an die Steuerung bzw. Regelung ein besonders höherer Anspruch gegenüber einer Wagenkastensteuerung gelegt. Liegt auf Grund der Federung des Wagenkastens bzw. der trotz eines erwünschten leichten Aufbaues noch immer hohen Masse eine Dämpfung der Querbewegung vor, so muß gerade bei einem Bauelement mit außerordentlich geringer Masse, wie dies bei den beiden angeführten Bauelementen der Fall ist, an die Dämpfung der Bewegung ein besonders hoher Anspruch gelegt werden.

Aus der GB-2 079 701-A wird ein Waggon einer Magnetschwebebahn mit Wagenkastensteuerung bekannt. Der Wagenkasten liegt hiebei über Rollen, deren Achsen in Fahrtrichtung des Zuges orientiert sind, am Fahrgestell auf. Diese Rollen sind auf einem eigenen Träger vorgesehen, an welchem mittig eine Kolbenstange angelenkt ist, wohingegen der entsprechende Zylinder am Fahrgestell angelenkt ist. Dieser Zylinder wird hydraulisch betätigt. Zur Betätigung desselben kann entweder eine Pumpe für die Hydraulikflüssigkeit oder auch nur ein Ventil, das mit einer Druckquelle verbunden ist, gesteuert werden. Zur Steuerung sind jeweils einzelne Stromkreise mit Detektoren, Filter und Verstärker vorgesehen, wobei sowohl Querbeschleunigungen als auch Vertikalbeschleunigungen gemessen und in elektrische Größen umgewandelt werden, welche direkt zur Regelung eingesetzt werden. Zur Glättung der Werte werden Filter und gegebenenfalls eine Integricrung über die Zeit eingesetzt. Auch hier liegt offensichtlich ein hochempfindliches System vor, das für die Steuerung bzw. Relegung von Querbewegungen nur schwer zum Einsatz gelangen kann.

Die vorliegende Erfindung hat sich zum Ziel gesetzt, ein schienengeleitetes Fahrzeug mit einem Fahrgestell und einem quer zur Fahrtrichtung beweglichen Bauteil zu schaffen, das erlaubt, die Querbewegungen bzw. Schwenkbewegungen in rascher Folge nach Auftreten der Querbeschleunigungskräfte durchzuführen, wobei einerseits die Ansprechzeiten des Meßfühlers sehr gering sein sollen und andererseits überlagerte Schwingungen nicht oder nur geringfügig die Meßgrößen beeinflussen. Weiters soll die Möglichkeit bestehen, eine Verknüpfung mit weiteren Parametern zu ermöglichen. Eine weitere Aufgabe der vorliegenden Erfindung besteht darin, ein schienengeleitetes Fahrzeug zu schaffen, das möglichst einfach ausgebildet ist und eine hohe Betriebssicherheit aufweist. Weiters soll der Sensor leicht zu montieren sein und nur einen geringen Platzbedarf aufweisen.

Die vorliegende Erfindung geht von einem Stand der Technik aus, wie er durch die GB-A-2 079 701 gegeben ist.

Das erfindungsgemäße schienengeleitete Fahrzeug, z. B. Triebfahrzeug, Waggon, mit einem Fahrgestell, insbesondere Drehgestell und zumindest einem weiteren Bauteil, z. B. Wagenkasten, Stromabnehmer, welcher, bezogen auf das Fahrgestell, über einen Antrieb quer zur Fortbewegungsrichtung des Fahrzeuges bewegbar, insbesondere schwenkbar, ist, wobei der Antrieb über einen Sensor, welcher über Querbeschleunigungskräfte beeinflußbar ist, betätigbar ist, besteht im wesentlichen darin, daß der Sensor mit einem Kondensator aufgebaut ist, welcher zumindest eine relativ zu einer bewegbaren Komponente feststehende Kondensatorplatte und zumindest die von den Querbeschlcunigungskräften bewegbare Komponente aufweist, und insbesondere über einen Analog-Digital-wandler, vorzugsweise mit einem Rechner, gegebenenfalls mit einem Zeitnormal, verbunden ist, über welchen der Antrieb angesteuert, insbesondere geregelt, ist.

Wird als Sensor für die Querbeschleunigungskräfte ein Kondensator verwendet, so kann bereits bei der Bestimmung der Kapazität des Kondensators, welcher über einen Bauteil verfügt, der von den Querbeschleunigungskräften beaufschlagbar ist, eine Glättung durch die Trägheit der beweglichen Komponente als auch ein rasches Ansprechen erreicht werden. Ist der Sensor insbesondere über einen Analog-Digitalwandler mit einem Rechner verbunden, so können zur Steuerung des Antriebes auch weitere Parameter besonders einfach berücksichtigt werden.

Der Einsatz von Kondensatoren mit einer beweglichen Komponente ist bekannt, um eine statische Überwachung von Bauwerken, Maschinenbetten, Kränen, Antennenmasten u. dgl. durchzuführen.

Ist die von den Querbeschlcunigungskräften bewegbare Komponente eine Flüssigkeit, insbesondere mit einer Dielektrizitätskonstante größer eins, in welche die feststehenden Kondensatorplatten eintauchen, so ist ein besonders störungsfreier Sensor gegeben, da beispielsweise keine drehbar gelagerten Kondensatorplatten vorgesehen werden müssen, sondern die Änderung der Kapazität ohne mechanisch gelagerte Teile erreicht werden kann.

Ist der Sensor mit zumindest zwei Kondensatoren aufgebaut, so können bei geeigneter Schaltung derselben Schwingungen besonders einfach kompensiert werden, da einer der Kodensatoren zur Abgabe einer Vergleichsspannung dient, und der weitere Kondcnsator der Meßkondensator ist, so daß eine vollkommene Kompensation der Schwingungen, welche die Querkräfte überlagern, erreicht werden kann.

Ist der Sensor, wie an sich bekannt, am und/oder im Wagenkasten angeordnet, und der Stromabnehmer, insbesondere die Palette desselben, über den Antrieb quer zur Fahrtrichtung, bezogen auf den Wagenkasten, bewegbar, insbesondere schwenkbar, so kann erreicht werden, daß der Stromabnehmer bzw. die Palette im vorgeschriebenen Raum an der Oberleitung anliegt, so daß trotz Neigung des Kastens eine sichere Stromabnahme auch bei höheren Geschwindigkeiten möglich ist.

Sind Signalgeber für die jeweiligen maximalen beiden Endlagen der Bauteile vorgesehen, welche mit dem Rechner verknüpft sind, so kann beispielsweise die Zeit, welche benötigt wird, um von der Ruhelage in der Mitte zu einer der Endlagen zu kommen, berechnet werden. Liegt eine Abweichung vom Sollwert vor, so kann auf Störungen, wie beispielsweise Vereisungen oder andere Verschmutzungen, geschlossen werden. Auch kann festgestellt werden, ob überhaupt eine Bewegung durchgeführt wurde. Ein Abziehen des Strombügels kann dann beispielsweise nach selbststätigem Ausschalten des Stromflusses eingeleitet werden, oder es kann eine obere Begrenzung der Geschwindigkeit des Triebfahrzeuges vorgegeben werden.

Ist ein Temperaturmeßfühler, insbesondere ein Thermoelement mit dem Rechner verknüpft, so kann z. B. die Änderung der Dielektritätskonstante mit der Temperatur im Sensor als auch die Temperaturabhängigkeit der gesamten Steuerung auf besonders einfache Weise berücksichtigt werden, da lediglich ein Vergleich auf Grund der vorgegebenen Temperatur durchgeführt werden muß.

Ist ein Geschwindigkeitsmeßfühler, z. B. Generator, Hallsensor, mit dem Rechner verknüpft, so kann beispielsweise die Geschwindigkeit der Betätigung des Antriebes zur Querbewegung darüber beeinflußt werden. Je höher die Geschwindigkeit des Zuges ist, umso rascher muß der Antrieb für die Querbewegung, Schwenkbewegung bzw. Ncigbcwegung des Bauteiles betätigt werden. So ist denkbar, daß beispielsweise zusätzlich eine weitere Druckquelle, wie beispielsweise weitere Hydraulikpumpe, ab einer gewissen Geschwindigkeit eingeschaltet wird.

Ist ein Sensor, insbesondere der Sensor, am Fahrgestell vorgesehen, so liegt zwar der Nachteil vor, daß Schwingungen ungedämpft an den Sensor weitergeleitet werden, jedoch kann zusätzlich die Überhöhung des Gleises mitberücksichtigt werden.

Im folgenden wird die Erfindung anhand der Zeichnungen näher erläutert.

Es zeigen:
Fig. 1 einen Wagenkasten auf einem Drehgestell in schematischer Darstellung,
Fig. 2 einen querverschieblichen Stromabnehmer,
Fig. 3 einen Stromabnehmer mit querverschieblicher Palette,
Fig. 4a und 4b einen Plattenkondensator mit Flüssigkeit,
Fig. 5 einen Rohrkondensator,
Fig. 6 einen Quetschkondensator,
Fig. 7 einen Plattenkondensator,
Fig. 8 ein Blockschaltbild mit zwei Kondensatoren und
Fig. 9 ein Blockschaltbild für eine Anordnung zur Neigung des Wagenkastens bzw. Querverschiebung des Stromabnehmers.

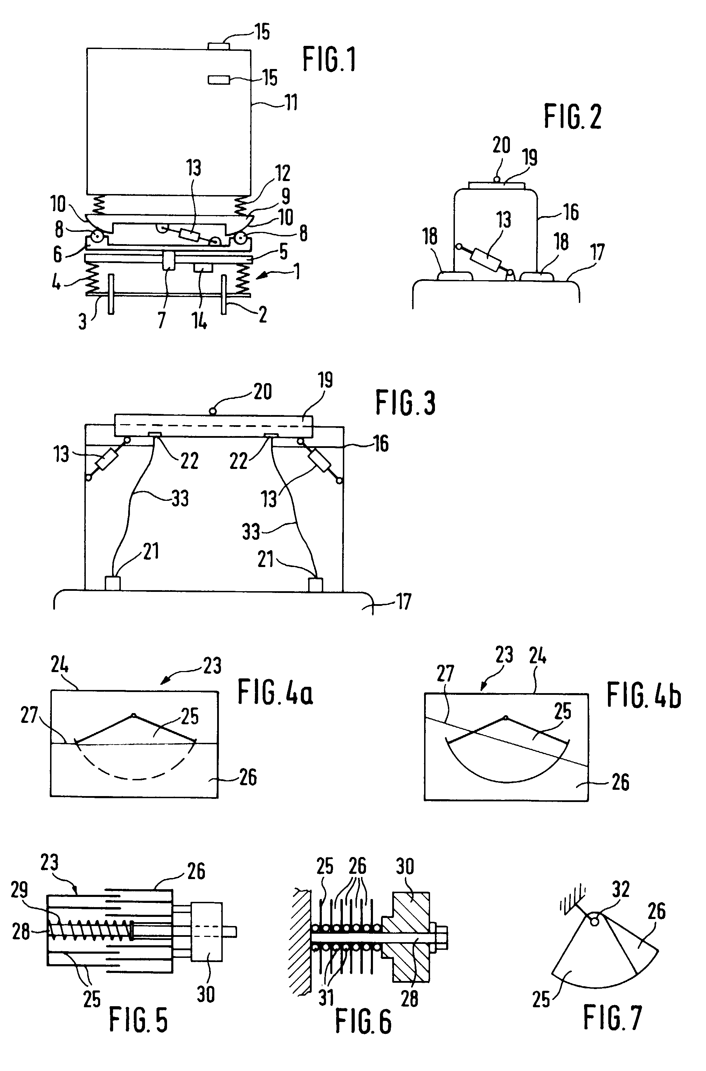

In Fig. 1 ist in schematischer Darstellung ein Waggon gezeigt. Das Drehgestell 1 weist Räder 2 mit einer Achse 3 auf, welche über Schraubenfedern 4 einen Lagerteil 5 trägt, in welchem ein Drehteil 6 über den Zapfen 7 gelagert ist. Der Drehteil 6 weist Rollen 8 auf, auf welchem ein Tragkörper 9 über teilzylindrische Flächen 10 aufruht. Der Wagenkasten 11 kann mit dem Tragkörper 9 direkt verbunden sein oder, wie im vorliegenden Fall, über zusätzliche Federelemente 12 federnd verbunden sein. Über den Antrieb 13, ein hydraulisch betätigbares Zylinder-Kolben-Aggregat, das einerseits am Tragkörper 9 und andererseits am Drehteil 6 angelenkt ist, kann der Tragkörper 9 und damit der Wagenkasten 11 in beiden Richtungen zur Horizontalen geneigt werden. Am Drehgestell 1 ist ein Sensor 14 und am und im Wagenkasten 1 1 ein Sensor 15 angeordnet, über welchen die Querbeschleunigungskräfte aufgenommen werden können, über welche, wie im folgenden beschrieben, der Antrieb 13 betätigt wird, so daß der Tragkörper 9 entlang seiner teilzylindrischen Flächen 10 auf den Rollen 8 des Drehteiles 6 bewegt werden kann.

In Fig. 2 ist schematisch ein Stromabnchmer 16 am Dach 17 eines Triebfahrzeuges dargestellt. Der Stromabnehmer 16 ist entlang von Führungen 18 parallel zum Dach 17 von einer Mittelstellung, in welcher der Stromabnehmer dargestellt ist, über den Antrieb 13, welcher über ein druckluftbeaufschlagtes Zylinder-Kolben-Aggregat gebildet wird, in die beiden Endlagen links und rechts von der dargestellten Mittenlage bewegbar. Der Stromabnehmer 16 weist eine Palette 19 auf, welche den Strom vom Fahrdraht 20 abnimmt.

In Fig. 3 ist ein Stromabnehmer 16 dargestellt, der eine Palette 19 aufweist, welche quer zum Fahrdraht 20 verschiebbar ist. Die Antriebe 13, u. zw. mit Preßluft betriebene Zylinder-Kolben-Aggregate sind sowohl am Stromabnehmer 16 als auch an der Palette 19 angelenkt. Am Dach 17 des Triebfahrzeuges, das beispielsweise auch durch eine Lokomotive gebildet sein kann, sind Signalgeber 21 angeordnet. Durch diese Signalgeber 21, welche durch eine Fotozelle mit Lichtquelle gebildet sind, kann die jeweilige Endlage der Palette, bezogen links bzw. rechts von der dargestellten Mittellage erfaßt werden. Auf der Palette selbst ist, wenn sie sich in der Endlage befindet, eine Lichtstrahlen reflektierende Fläche 22 im Strahlengang des Signalgebers angeordnet, welche bei der jeweiligen Endlage der Palette eine hohe Reflexion der aus dem Signalgeber 21 über den Glasfaserleiter 33, welcher am Stromabnehmer 16 lagefixiert ist, abgesandten Lichtes bewirkt, so daß die im Signalgeber 21 vorgesehene Fotozelle ein Signal, beispielsweise an einem Rechner, weitergeben kann, Endlage links oder Endlage rechts erreicht.

Die Lagebestimmung der Palette oder des Stromabnehmers kann auch über den Antrieb selbst erfolgen. Wird der Antrieb durch ein Zylinder-Kolben-Aggregat gebildet, so kann der Zylinder ein Fenster aufweisen, zu welchem ein Glasfaserleiter von einer Fotodiode mit Lichtquelle geleitet ist. Der Kolben kann entlang seiner Fläche, die am Fenster vorbeigeführt wird, Bereiche mit unterschiedlichen Reflexionsvermögen aufweisen. Durch die unterschiedliche Intensität des Lichtes, welches in die Fotodiode gelangt, kann sodann auf die exakte Lage des Kolbens im Zylinder Rückschluß gehalten werden. Jede Lage des Kolbens im Zylinder entspricht jedoch einer bestimmten Lage der Palette.

In den Fig. 4a und 4b ist ein Sensor 23 dargestellt, der ein Gehäuse 24 aufweist, in welchem feststehende Kondensatorplatten 25 und als bewegliche Komponente 26 eine Flüssigkeit, u. zw. Cyklohexan, mit einer Dielektrizitätskonstante von 2,0 angeordnet ist. Die Kondensatorplatten 25 sind in einer Reihe hintereinander und in Abstand zueinander angeordnet und tauchen in die Flüssigkeit, welche die bewegliche Komponente 26 bildet, ein. Die Kondensatorplatten 25 sind quer, insbesondere normal, zur Fortbewegungsrichtung des schienengeleiteten Fahrzeuges angeordnet. Bei einer Fahrt entlang einer geraden Strecke orientiert sich der Flüssigkeitsspiegel 27, wie in Fig. 4a dargestellt, an der Schwerkraft. Durchfährt das schienengeleitete Fahrzeug eine Kurve, so wird die Flüssigkeit durch Querbeschleunigungskräfte beaufschlagt, so daß der Flüssigkeitsspiegel 27 nicht nur durch die Schwerkraft, sondern auch durch die Zentrifugalkräfte in der Kurve beaufschlagt wird und somit nicht mehr normal zur Senkrechten ist. Bei einer höheren Anzahl hintereinander angeordneten Kondensatorplatten 25 kann ein derartiger Sensor auch zur Bestimmung der Neigung eines Fahrzeuges nicht nur quer, sondern auch in Fahrtrichtung eingesetzt werden. Das Funktionsprinzip eines derartigen Kondensators als Meßvorrichtung besteht darin, daß die Dielektrizitätskonstante der Flüssigkeit größer ist als die des darüber vorgesehenen Gases, beispielsweise Luft, mit einer Dielektrizitätskonstante von eins. Damit ändert sich die Kapazität des Kondensators je nach dem, wie tief die Kondensatorplatten 25 in die bewegliche Komponente 26, u. zw. die Flüssigkeit, eintauchen.

Als bewegliche Komponente können auch Kondensatorplatten, wie in Fig. 7 dargestellt, vorgesehen sein, die um eine Achse 32 in Fahrtrichtung drehbar gelagert sind, so daß durch Beaufschlagung von Zentrifugalkräften der Schwerpunkt der beweglichen Kondensatorplatten 26 in Richtung Kurvenaußenseite bewegt wird. Auch dadurch wird die Kapazität des Kondensators verändert, da der Bereich, in welchem sich die feststehenden Kondensatorplatten 25 und die beweglichen Kondensatorplatten einander überdecken, verändert wird.

In Fig. 5 ist ein weiterer Sensor 23 dargestellt, welcher als sogenannter Rohrkondensator ausgebildet ist. Die feststehenden Kondensatorplatten 25 sind durch konzentrisch angeordnete Rohre gebildet. Mittig zu diesen ist eine Führung 28 angeordnet, um welche die bewegliche Komponente 26, welche ebenfalls durch konzentrisch angeordnete rohrförmige Kondensatorplatten gebildet ist, die gegen die Kraft der Feder 29 über das durch die Fliehkraft beaufschlagbare Gewicht 30 mehr oder weniger stark zwischen die feststehenden rohrförmigen Kondensatorplatten 25 eingeschoben werden. Je nachdem, wie groß die Kräfte sind, die auf das Gewicht 30 einwirken, wird die bewegliche Komponente 26 die Kraft der Feder 29 entsprechend überwinden und die bewegliche Komponente 26 zwischen den feststehenden Kondensatorplatten 25 eintauchen und damit die Kapazität verändern.

Bei der in Fig. 6 dargestellten Ausführungsform liegt ein sogenannter Quetschkondensator vor, wobei die feststehende Komponente durch eine Kondensatorplatte 25 gebildet ist, durch deren Mitte elektrisch isoliert eine Führung 28 angeordnet ist. In Abstand zueinander sind weitere ringförmige Kondensatorplatten als bewegliche Komponente 26 angeordnet, die durch elektrisch isolierende elastisch deformierbare Ringelemente 31 voneinander getrennt sind. Am Ende der Führung 28 ist ein Gewicht 30 angeordnet, das bei Beaufschlagung durch Zentrifugalkräfte die elastisch deformierbaren Ringelemente deformiert, so daß der Abstand der Kondensatorplatten zueinander geringer wird, womit eine Änderung der Kapazität des Kondensators eintritt. Bei geeigneter Vorspannung der elastischen Ringelemente 31 kann mit einem derartigen Kondensator, dessen Führung quer zur Fortbewegungsrichtung des schienengeleiteten Fahrzeuges angeordnet ist, eine Messung der Zentrifugalkräfte in beiden Richtungen quer zur Fortbewegungsrichtung erfolgen.

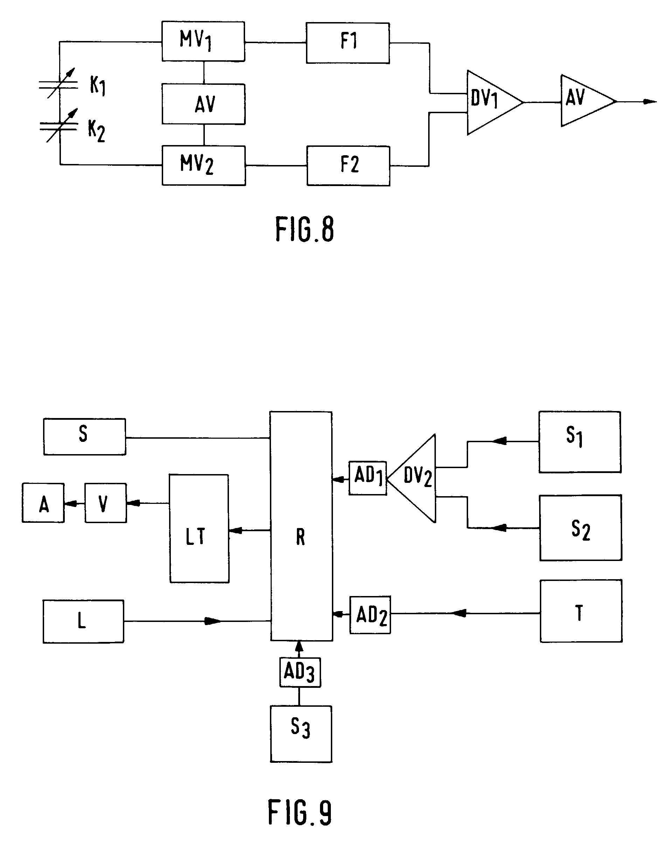

In Fig. 8 ist ein elektrisches Blockschaltbild eines Sensors dargestellt, wobei zwei Kondensatoren K₁ und K₂ vorgesehen sind, die eine durch Zentrifugalkräfte veränderbare Kapazität aufweisen. Derartige Konstruktionen sind in den Fig. 4, 5, 6 und 7 beschrieben. Die Ansteuerung mit Strom erfolgt über den astabilen Multivibrator AV, welcher die monostabilen Multivibratoren MV₁ und MV₂ ansteuert und synchronisiert, wodurch von den beiden monostabilen Multivibratoren ein Spannungspegel an die Kondensatoren K₁ und K₂ zeitgleich abgegeben wird. Die Kondensatoren K₁ und K₂ werden über einen nicht dargestellten Widerstand geladen. Zu einem durch den Multivibrator AV vorgegebenen Zeitpunkt werden die Spannungen der Kondensatoren mit einem Spannungsnormal verglichen. Das daraus resultierende impulsmodulierte Signal, das proportional zur Kapazität des Kondensators ist, gelangt über die Filter F₁ und F₂, in welchen die hochfrequenten Komponenten des Stromes, die auf Schwingungen, insbesondere Eigenfrequenzen, des schienengebundenen Fahrzeuges bzw. seiner Komponenten zurückzuführen sind, ausgefiltert werden. Der Strom gelangt sodann in den Differenzverstärker DV₁, da die Kondensatoren auch zum Ausblenden von Störungen dienen. Der aus dem Differenzverstärker DV₁ austretende Strom gelangt im Ausgangsverstärker AV zur Verstärkung und wird sodann dem Rechner, gegebenenfalls über einen Analog-Digitalwandler, zugeführt. Die Kapazität der Kondensatoren K₁ und K₂ liegt zwischen n Farad und p Farad.

Das Blockschaltbild gemäß Fig. 9 stellt eine Steuerung sowohl für die Wagenkastenneigung, der Verschiebung des Stromabnehmers als auch der Palette eines Stromabnehmers dar.

Der Sensor S₁ entspricht dem Sensor 15 gemäß Fig. 1, welcher am Wagenkasten angebracht ist, wohingegen der Sensor S₂ dem Sensor 14 entspricht, welcher am Drehgestell vorgesehen ist. Die Analogwerte der Sensoren gelangen in den Differenzverstärker DV₂, so daß das aus dem Differenzverstärker ausgehende Signal eine Kompensation der Neigung des Drehgestells quer zur Fahrtrichtung und der Summe Neigung des Wagenkastens und Beaufschlagung durch Zentrifugalkräfte, gemessen in S₁ darstellt. Der Wert gelangt sodann über den Analog-Digitalwandler AD₁ in den Rechner R. Zur Kompensation der Temperaturabhängigkeit sowohl der Signale aus den Sensorcn S₁ und S₂ als auch der Temperaturabhängigkeit der Verstärker kann über den Sensor T, u. zw. ein Thermoelement, die Temperatur gemessen werden und der Wert über den Analog-Digitalwandler AD₂ in den Rechner eingegeben werden, so daß auf Grund einer dem Rechner eingegebenen Funktion, bei welcher die Temperatur die Variable ist, der jeweilige Wert der Querbeschleunigungskräfte bestimmt bzw. die erforderliche Betätigung des Antriebes A erfolgen kann.

Als weitere Variable kann die Geschwindigkeit über den Sensor S₃ dem Rechner über den Analog-Digitalwandler AD₃ eingegeben werden. Die Geschwindigkeit ist beispielsweise maßgeblich dafür, wie schnell der Stromabnehmer als auch die Palette sowie der Wagenkasten quer zur Fortbewegungsrichtung bewegt bzw. geschwenkt werden soll. Bei geringer Geschwindigkeit besteht auch die Gefahr, daß der Stromabnehmer in die falsche Richtung bewegt wird. Dieser Vorgang kann jedoch durch die Endlagenerfassung bestimmt und unmittelbar anschließend richtiggestellt werden.

Aus dem Rechner R gelangt ein Signal unter Entkopplung zum Leistungstreiber LT, welcher seinerseits den Antrieb V für den Antrieb A, u. zw. ein Zylinder-Kolben-Aggregat, das pneumatisch oder hydraulisch beaufschlagt wird, betätigt. Anstelle dieses Antriebes A kann auch ein Elektromotor, welcher über ein Ritzel die Stcllung der Bauteile über eine Zahnstange ändert, vorgesehen sein. Über L kann beispielsweise das Erreichen der Endlage des Stromabnehmers der Palette oder auch des Wagenkastens dem Rechner gemeldet werden, wobei weiters die Möglichkeit besteht, auch bestimmte Zwischenlagen dieser Bauteile an den Rechner zu melden. Es ist lediglich erforderlich, daß entsprechende Sensoren für die jeweiligen Lagen vorgesehen werden. Entspricht die Ist-Lage des Bauteiles nicht der Soll-Lage, so kann über den Rechner erneut eine Ansteuerung erfolgen. Auch kann, wenn im Rechner ein Zeitglied, z. B. Schwingquarz als Zeitnormal, vorgesehen ist, die Zeit, welche zur Bewegung erforderlich war, bestimmt werden und z. B. bei Überschreiten einer Vorgabe ein Warnsignal eingeschaltet, die Geschwindigkeit reduziert oder der Stromabnehmer abgezogen werden. Zusätzlich kann der Rechner mit einem Schreiber S versehen werden, der jeweils die aktuellen Daten aufzeichnet.

Das Programm für den Rechner ist wie folgt:

Das Programm ist grundsätzlich so strukturiert, daß keine Eingangswerte an einem Ausgang ausgegeben werden können, sondern immer abhängig von bestimmten Ereignissen die Ausgangswerte verändert werden, d. h., es liegt eine Datenkapselung vor.

Nach der Initialisierung der Mikrokontrollerperipherie werden die Analogwerte über einen 10 Bit Analog-Digitalwandler eingelesen. Die eingelesenen Werte werden dann rechnerisch verknüpft, womit andere Ausgangswerte generiert sind. Weiters ist die Möglichkeit vorgesehen, die Digitalwerte über Ausgangsports zu überprüfen. Neben dem Hauptprogramm ist ein interruptgesteuertes Zeitnormal bzw. Aufgabenmanagement vorgesehen, wodurch alle zeitlich bestimmten Abläufe gesteuert und gegebenenfalls geregelt werden können. Vor Ablauf des Hauptprogrammes müssen die Variablen, u. zw. Rechnervariablen, für den Speicherplatz im Rechner (Platzhalter im Speicher gibt Länge und Art des variablen Typs an) definiert werden. Sodann erfolgt eine Generierung der In- und Outputs der Ein- und Ausgänge, die Initialisierung der Peripheriebausteine, u. zw. Analog-Digitalkonverter, des Timers, des Interruptkontrollers, mathematischen Coprozessors und des Watchdogs, worauf der Programmteil zur Überprüfung der Bügelansteuerung (Testen der Endlagenerfassung in Abhängigkeit der Zeit bzw. der Ansteuerung des Stromabnehmers bzw. Ansteuerung des Antriebes für die Wagenkastenneigung) erfolgt.

Das Hauptprogramm beinhaltet folgende llauptprogrammpunkte:
Einlesen der aktuellen Geschwindigkeit
Einlesen der analogen Sensorwerte von zwei Sensoren
Einlesen des Temperaturwertes
Digitales Filter für Analogwerte
Temperaturkompensation der Eingangswerte
Auswertung der Sensorwerte mit Zusatzzeitglied
Spike-Filter für Ansteuerwerte
Ansteuerung der Stromabnehmerpaletten-Ventile (für Zylinder-Kolben-Aggregate)
Rückstellkontrolle der Stromabnehmerpalette
Zeitauswertung der Endlagen
Fehlererkennung bei Zeitüberschreitung
Prioritäten- und Maßnahmensetzung bei Fehler
Watchdog-Rücksetzung

Zusätzlich ist ein Unterbrechungsprogramm in Abhängigkeit von der Zeit vorgesehen, wobei über Zeitregister jeweils die erforderlichen Zeiten für einen bestimmten Bewegungsablauf überprüft werden und gegebenenfalls eine Abschaltung erfolgt, beispielsweise der Stromabnehmer vom Stromleiter abgezogen wird, wobei zuvor ein Hauptschalter für die Stromzufuhr zur Unterbrechung des Stromdurchflusses betätigt wird. So kann beispielsweise eine Maximalgeschwindigkeit des rollenden Materials vorgeschrieben werden, wenn Mindestzeiten für die Bewegung des Stromabnehmers oder der Palette nicht erreicht werden.

## Patentansprüche

1. Schienengeleitetes Fahrzeug, z. B. Triebfahrzeug, Waggon, mit einem Fahrgestell, insbesondere Drehgestell und zumindest einem weiteren Bauteil, z. B. Wagenkasten, Stromabnehmer, welcher, bezogen auf das Fahrgestell, über einen Antrieb quer zur Fortbewegungsrichtung des Fahrzeuges bewegbar, insbesondere schwenkbar, ist, wobei der Antrieb über einen Sensor, welcher über Querbeschleunigungskräfte beeinflußbar ist, betätigbar ist, dadurch gekennzeichnet, daß der Sensor (14, 15, 23) mit einem Kondensator (K₁, K₂) aufgebaut ist, welcher zumindest eine relativ zu einer bewegbaren Komponente feststehende Kondensatorplatte (25) und zumindest die von den Querbeschleunigungskräften bewegbare Komponente (26) aufweist, und insbesondere über einen Analog-Digitalwandler (AD₁, AD₂, AD₃), vorzugsweise mit einem Rechner (R), gegebenenfalls mit Zeitnormal, verbunden ist, über welchen der Antrieb (13) angesteuert, insbesondere geregelt, ist.

2. Schienengeleitetes Fahrzeug nach Anspruch 1, dadurch gekennzeichnet, daß die von den Querbeschleunigungskräften bewegbare Komponente (26) eine Flüssigkeit, insbesondere mit einer Dielektrizitätskonstante größer eins, ist, in welche die feststehende(n) Kondensatorplatte(n) (25) eintaucht(en).

3. Schienengeleitetes Fahrzeug nach Anspruch 1 oder 2, dadurch gekennzeichnet, daß der Sensor (14, 15) mit zumindest zwei Kondensatoren (K₁, K₂) aufgebaut ist.

4. Schienengeleitetes Fahrzeug nach Anspruch 1, 2 oder 3, dadurch gekennzeichnet, daß der Sensor (14, 15), wie an sich bekannt, am und/oder im Wagenkasten (11) angeordnet ist, und der Stromabnehmer (16), insbesondere eine Palette (19), über den Antrieb (13) quer zur Fahrtrichtung, bezogen auf den Wagenkasten (11), bewegbar, insbesondere schwenkbar, ist.

5. Schienengeleitetes Fahrzeug nach einem der Ansprüche 1 bis 4, dadurch gekennzeichnet, daß Signalgeber (21) für die jeweiligen maximalen beiden Endlagen der Bauteile vorgesehen sind, welche mit dem Rechner (R) verknüpft sind.

6. Schienengeleitetes Fahrzeug nach einem der Ansprüche 1 bis 5, dadurch gekennzeichnet, daß ein Temperaturmeßfühler (T), insbesondere ein Thermoelement, mit dem Rechner (R) verknüpft ist.

7. Schienengeleitetes Fahrzeug nach einem der Ansprüche 1 bis 6, dadurch gekennzeichnet, daß ein Geschwindigkeitsmeßfühler (S₃), z. B. ein Generator, Hallsensor, mit dem Rechner (R) verknüpft ist.

8. Schienengeleitetes Fahrzeug nach einem der Ansprüche 1 bis 7, dadurch gekennzeichnet, daß ein Sensor (14), insbesondere der Sensor (14), am Fahrgestell (1) angeordnet ist, welcher mit dem Rechner (R) verknüpft ist.
